# EUROPÄISCHE PATENTANMELDUNG

(11) **EP 1 662 157 A1**
(43) Veröffentlichungstag der Anmeldung: **31.05.2006**
(21) Anmeldenummer: 05018857.2
(22) Anmeldetag: 31.08.2005
(51) Int. Cl.: F16C 1/12

(54) **Betätigungsvorrichtung**

(30) Priorität: 27.11.2004 DE 102004057363
(71) Anmelder: Stabilus GmbH, 56070 Koblenz (DE)
(72) Erfinder: Hillen, Jörg, 56283 Nörtershausen (DE); Kleinmann, Michael, 56581 Melsbach (DE); Schilken, Heiko, 56826 Lutzerath (DE)
(74) Vertreter: Klein, Thomas

(57) **Zusammenfassung**

Die Erfindung bezieht sich auf eine Betätigungsvorrichtung 1 für ein bewegbares Bauteil, insbesondere für ein verschwenk- und/oder verschiebbares Schließbauteil eines Kraftfahrzeuges, mit zwei auf jeweils einen Anlenkpunkt des Bauteils wirkenden Teilzugmitteln 2, 3 und mit einer einen drehbar antreibbaren Schwenkkörper 14 für eine Kraftübertragung auf die Teilzugmittel 2, 3 aufweisenden Antriebseinheit 12, wobei die Teilzugmittel auf den Schwenkkörper 14 auf- und abwickelbar sind. Zur gleichmäßigen Krafteinleitung in die Anlenkpunkte des Bauteils wird vorgeschlagen, daß die Teilzugmittel 2, 3 ein einziges Zugmittel 17 bildend miteinander verbunden sind und daß das Zugmittel 17 den Schwenkkörper 14 verschiebbar zwischen zwei an dem Schwenkkörper 14 angeordneten, bei einem Verschwenken des Schwenkkörpers 14 eine Zugkraft auf jeweils ein Ende 18, 19 des Zugmittels 17 ausübenden Auslenkelementen 25, 26 durchgreift.

## Beschreibung

Die Erfindung bezieht sich auf eine Betätigungsvorrichtung für ein bewegbares Bauteil, insbesondere für ein verschwenk- und/oder verschiebbares Schließbauteil eines Kraftfahrzeuges, mit zwei auf jeweils einen Anlenkpunkt des Bauteils wirkenden Teilzugmitteln und mit einer einen drehbar antreibbaren Schwenkkörper für eine Kraftübertragung auf die Teilzugmittel aufweisenden Antriebseinheit, wobei die Teilzugmittel auf den Schwenkkörper auf- und abwickelbar sind.

Eine solche Betätigungsvorrichtung ist zum Beispiel als Kofferraumdeckelbetätigung für ein Personenkraftfahrzeug bekannt. Dabei ist ein Verstellmechanismus vorgesehen, mittels dessen zwei Verschiebemechanismen betätigbar sind, die einer Verschiebung eines Anlenkpunktes jeweils einer Gasdruckfeder dienen. Die Gasdruckfedern sind an gegenüberliegenden Seiten des Kofferraumdeckels angeordnet und dienen einem Öffnen des Kofferraumdeckels. Die Verschiebemechanismen sollen mit dem Verstellmechanismus synchron verstellbar sein. Dazu weist eine Verstelleinheit des Verstellmechanismus einen Exzenter auf, der motorisch in Rotation versetzt werden kann und beispielsweise als Hebelgelenk ausgebildet ist. An gegenüberliegenden Endbereichen des Exzenters sind Hebelarme angelenkt, an denen wiederum jeweils eine Zug- und Druckstange jeweils eines als Zug-Druck-Kabel ausgebildeten flexiblen Zugmittels angelenkt sind. Die Zug-Druck-Kabel führen zu jeweils einem zugeordneten Verschiebemechanismus für die Anlenkpunkte der Gasdruckfedern. Insbesondere bei einer im Zeitverlauf eintretenden unterschiedlichen Längenänderung der Zugmittel ist eine gleichlaufende Betätigung der Verschiebemechanismen nicht mehr sichergestellt, und es besteht die Gefahr einer Verwindung des Kofferraumdeckels.

Außerdem ist eine einen Seilantrieb aufweisende Antriebsvorrichtung für einen Fahrzeugschiebedachdeckel bekannt, bei der ein in einer Endlosschleife geführtes Seil auf zwei gleichsinnig angetriebene Wickeltrommeln aufwickelbar ist. Zusätzlich umschlingt ein mittlerer Abschnitt des Seiles eine weitere Wickeltrommel und teilt dadurch das Seil in zwei Seilstränge, von denen jeweils einer an gegenüberliegenden Seiten des Fahrzeugschiebedachdeckels an diesem angreift. Bei unterschiedlicher Längenänderung der Seilstränge kommt es zu einer ungleichmäßigen Krafteinleitung in den Fahrzeugschiebedachdeckel, der dadurch zu Verkanten und zu Verklemmen droht.

Der vorliegenden Erfindung liegt ausgehend vom Stand der Technik die Aufgabe zugrunde, eine Betätigungsvorrichtung der eingangs genannten Art zu schaffen, bei der eine gleichmäßige Krafteinleitung in die Anlenkpunkte des Bauteils erfolgt und eine Längenänderung der Teilzugmittel automatisch ausgeglichen wird.

Diese Aufgabe wird erfindungsgemäß dadurch gelöst, daß die Teilzugmittel ein einziges Zugmittel bildend miteinander verbunden sind und daß das Zugmittel den Schwenkkörper verschiebbar zwischen zwei an dem Schwenkkörper angeordneten, bei einem Verschwenken des Schwenkkörpers eine Zugkraft auf jeweils ein Ende des Zugmittels ausübenden Auslenkelementen durchgreift.

Mit der Erfindung wird in jeden der beiden Anlenkpunkte des zu bewegenden Bauteils eine Kraft gleicher Größe eingeleitet. Ein Kraftausgleich zwischen den zu einem Zugmittel zusammengefaßten Teilzugmitteln, die bei der erfindungsgemäßen Betätigungsvorrichtung von den beiden Enden des einen, einzigen Zugmittels gebildet werden, erfolgt selbsttätig, und zwar durch eine den Kraftausgleich bewirkende Verschiebung des Zugmittels gegenüber dem Schwenkkörper. Mit der Verschiebung erfolgt ein Längenausgleich zwischen den Enden des Zugmittels, so daß jedes Ende des Zugmittels mit jeweils der gleichen Zugmittellänge von einem zugeordneten Auslenkelement des Schwenkkörpers beabstandet ist. Eine Verwindung des Bauteils oder ein Verklemmen oder Verkanten des Bauteils bei seiner Bewegung aufgrund unterschiedlicher Krafteinleitung in den Anlenkpunkten wird mit der Erfindung zuverlässig vermieden. Die erfindungsgemäße Betätigungsvorrichtung eignet sich damit besonders für ein Öffnen und/oder Schließen eines großflächigen, nur bedingt biegesteifen Schließbauteiles wie zum Beispiel einer Heckklappe eines Kraftfahrzeuges. Beispielsweise auch zur Betätigung eines Schiebedaches oder einer Schiebetür eines Kraftfahrzeuges ist die Erfindung besonders geeignet. Zusätzlich von Vorteil bei einer Verwendung in Kraftfahrzeugen ist der ein nur geringes Gewicht aufweisende leichte Aufbau der Betätigungsvorrichtung sowie ihre hohe Betriebssicherheit und Dauerhaltbarkeit. Günstig ist, daß gegenüber dem bekannten Stand der Technik bei der Erfindung nur ein einziges Zugmittel vorzusehen ist, das während eines Betätigungsvorganges des zu bewegenden Bauteils um ein - regelmäßig geringes - Maß durch den Schwenkkörper durchgeschleift wird. Dadurch werden in einfacher Weise beispielsweise Dehnungen und Schrumpfungen des Zugmittels kompensiert. Längendifferenzen des Zugmittels werden ausgeglichen, die Bewegungen beider Anlenkpunkte des zu bewegenden Bauteils werden synchronisiert. Wird eine Bewegung des Zugmittels durch eine Drehung des Schwenkkörpers eingeleitet, kann das Zugmittel solange durch den Schwenkkörper nachrutschen, bis an beiden Enden des Zugmittels die gleiche Kraft anliegt; so wird sichergestellt, daß beispielsweise beide Scharniere einer Kofferraumklappe gleichzeitig beginnen, eine Schließbewegung auf die Kofferraumklappe zu übertragen. Als Zugmittel eignet sich vorzugsweise ein Seil, insbesondere Drahtseil, oder Kabel, das beidseitig des Schwenkkörpers bevorzugt als Bowdenzug ausgebildet sein kann.

Gemäß einer vorteilhaften Weiterbildung der Erfindung läßt sich sowohl besonders zuverlässig eine gleiche als auch eine hohe Zugkraft auf die Enden des Zugmittels aufbringen, wenn die Auslenkelemente in Längsrichtung des Zugmittels versetzt zueinander angeordnet sind.

Man könnte sich vorstellen, daß das Zugmittel den Schwenkkörper schräg in bezug auf die Schwenkachse und/oder in mehreren, unter einem Winkel zueinander angeordneten Ebenen durchgreift. Hingegen wird die Betriebssicherheit der Betätigungsvorrichtung weiter erhöht und ihr Verschleiß minimiert, wenn gemäß einer vorteilhaften Weiterbildung der Erfindung das Zugmittel den Schwenkkörper in einer Ebene senkrecht zur Schwenkachse des Schwenkkörpers durchgreift.

In einer einfachen Ausführungsform der Erfindung könnten die Auslenkelemente beispielsweise von jeweils einer von der Schwenkachse des Schwenkkörpers beabstandeten, an dem Schwenkkörper befestigten und von dem Zugmittel durchgriffenen Öse oder von Zapfen an dem Schwenkkörper gebildet sein. Insbesondere die Führung des Zugmittels in dem Schwenkkörper wird hingegen vorteilhaft verbessert, wenn gemäß einer Weiterbildung der Erfindung die Auslenkelemente Randabschnitte einer den Schwenkkörper durchgreifenden Ausnehmung zur Führung des Zugmittels aufweisen.

Die Ausnehmung des Schwenkkörpers könnte zum Beispiel eine Bohrung durch den Schwenkkörper sein. Die Herstellung, insbesondere der Zusammenbau, der Betätigungsvorrichtung wird aber gemäß einer vorteilhaften Weiterbildung der Erfindung vereinfacht, wenn die Ausnehmung eine an einer stirnseitigen Oberfläche des Schwenkkörpers offene Nut ist. In diese Nut kann das Zugmittel einfach eingelegt und anschließend z.B. durch einen Deckel abgedeckt werden.

Grundsätzlich kann der Verlauf der Ausnehmung in dem Schwenkkörper beliebig sein. Vorteilhaft eine einfach zu fertigende Ausnehmung erhält man gemäß einer Weiterbildung der Erfindung jedoch, wenn die Ausnehmung einen linearen Verlauf aufweist.

Gemäß einer anderen vorteilhaften Weiterbildung der Erfindung weist die Ausnehmung einen S-artigen Verlauf auf. Damit wird eine das Zugmittel besonders schonende, Reibung und Verschleiß minimierende Führung des Zugmittels in dem Schwenkkörper erreicht. Die Gefahr eines Knickens des Zugmittels ist damit nahezu ausgeschlossen.

Gemäß einer anderen vorteilhaften Weiterbildung der Erfindung durchgreift die Ausnehmung den Schwenkkörper die Schwenkachse schneidend, so daß der Schwenkkörper in einfacher Weise einen symmetrischen Aufbau mit gleichmäßiger Massenverteilung und unwuchtfreiem Lauf aufweisen kann.

Insbesondere zur Ausbildung eines beidseitig lagerbaren Lagerzapfens an dem Schwenkkörper ist es von besonderem Vorteil, wenn gemäß einer anderen Weiterbildung der Erfindung die Ausnehmung den Schwenkkörper von der Schwenkachse beabstandet durchgreift.

Eine Verringerung der Reibung zwischen Schwenkkörper und Zugmittel ergibt sich vorteilhaft, wenn gemäß einer anderen vorteilhaften Weiterbildung der Erfindung die Auslenkelemente drehbar an dem Schwenkkörper angeordnete Rollen aufweisen. Gemäß einer anderen vorteilhaften Weiterbildung der Erfindung läßt sich die Reibung zwischen Zugmittel und Schwenkkörper auch oder zusätzlich weiter verringern, wenn die Auslenkelemente und/oder das Zugmittel eine reibungsvermindernde Oberfläche aufweisen. Eine solche reibungsvermindernde Oberfläche kann zum Beispiel mittels einer Schmierung erzeugt sein. Die reibungsvermindernde Oberfläche kann beispielsweise aber auch eine Beschichtung, zum Beispiel mit Polytetrafluorethylen (PTFE), sein.

Insbesondere wenn das Zugmittel zur Bewegung des Bauteils einen nicht unerheblichen Weg zurücklegen muß, ist eine andere Weiterbildung der Erfindung besonders vorteilhaft, bei welcher Weiterbildung der Schwenkkörper eine Trommel aufweist, auf die das Zugmittel beim Verschwenken des Schwenkkörpers aufrollbar ist.

Zur Betätigung mehrerer Bauteile mittels nur einer Betätigungsvorrichtung ist ein Schwenkkörper vorstellbar, der zum Beispiel zwei oder mehr oben genannte Ausnehmungen besitzt, die in einfacher Form Bohrungen in dem Schwenkkörper sein können; es kann sich dabei beispielsweise aber auch um eine Ausnehmung in Doppel-S-Form oder in Form der Ziffer 8 handeln. Mit der erfindungsgemäßen Betätigungsvorrichtung können mehrere Bauteile gleichzeitig bewegt werden oder es kann mit einer einzigen Betätigungsvorrichtung das eine Bauteil sowohl in einer Öffnenrichtung als auch in einer Schließrichtung bewegt werden, wenn gemäß einer vorteilhaften Weiterbildung der Erfindung zwei, den Schwenkkörper in unterschiedlichen, parallelen Ebenen verschiebbar durchgreifende Zugmittel vorgesehen sind. Auf eine Trommel des Schwenkkörpers können dann gegebenenfalls zwei Zugmittelenden aufgewickelt und zwei Zugmittelenden abgewickelt werden, und zwar gleichzeitig.

Ausführungsbeispiele der Erfindung sind in der Zeichnung schematisiert dargestellt und werden im folgenden näher erläutert, wobei sich entsprechende Elemente in allen Figuren mit gleichen Bezugszeichen versehen sind. Es zeigen
- Figur 1:: eine Seitenansicht einer ersten Betätigungsvorrichtung,
- Figur 2:: eine Seitenansicht einer zweiten Betätigungsvorrichtung,
- Figur 3:: einen Schwenkkörper der Betätigungsvorrichtung nach Figur 2 in Seitenansicht,
- Figur 4:: den Schwenkkörper nach Figur 3 in teilgeschnittener Ansicht,
- Figur 5:: einen alternativen Schwenkkörper in Seitenansicht,
- Figur 6:: den Schwenkkörper nach Figur 5 in einer Schnittansicht und
- Figur 7:: eine Seitenansicht einer Betätigungsvorrichtung mit zwei Zugmitteln
- Figur 8: eine Ansicht eines ersten Ausführungsbeispiels einer Schwenkkörperanordnung
- Figur 9: eine Seitenansicht eines Schwenkkörpers der Schwenkkörperanordnung nach Figur 8
- Figur 10: den Schwenkkörper nach Figur 9 in teilgeschnittener Ansicht
- Figur 11: eine Seitenansicht eines zweiten Schwenkkörpers der Schwenkkörperanordnung nach Figur 8
- Figur 12: den zweiten Schwenkkörper nach Figur 11 in teilgeschnittener Ansicht
- Figur 13: eine Ansicht eines zweiten Ausführungsbeispiels einer Schwenkkörperanordnung
- Figur 14: eine Seitenansicht eines Schwenkkörpers der Schwenkkörperanordnung nach Figur 13
- Figur 15: den Schwenkkörper nach Figur 14 in teilgeschnittener Ansicht
- Figur 16: eine Seitenansicht eines zweiten Schwenkkörpers der Schwenkkörperanordnung nach Figur 13
- Figur 17: den zweiten Schwenkkörper nach Figur 16 in teilgeschnittener Ansicht

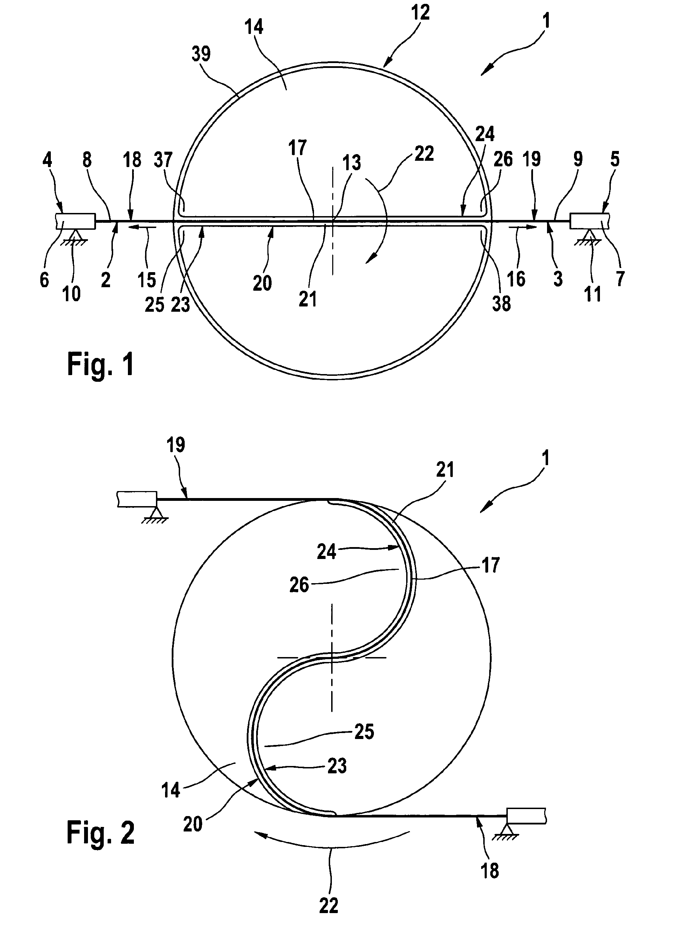

In Figur 1 ist eine Betätigungsvorrichtung 1 für ein hier nicht dargestelltes bewegbares Bauteil, insbesondere eine Heckklappe, eines Personenkraftfahrzeugs in einer Seitenansicht gezeigt. Die Betätigungsvorrichtung umfaßt zwei Teilzugmittel 2, 3, die jeweils als Bowdenzug 4, 5, und zwar in Form von in Schläuchen 6, 7 geführten Drahtseilen 8, 9, ausgebildet sind. Die Schläuche 6, 7 sind an Befestigungspunkten 10, 11 an der Karosserie des Personenkraftwagens gehalten.

Es versteht sich, daß die Teilzugmittel keine Bowdenzüge sein müssen, sondern auch einfache Seile oder Bänder sein können. Diese können Seile aus Draht oder einem anderen Werkstoff wie z.B. Kunststoff bestehen.

Die Betätigungsvorrichtung 1 umfaßt ferner eine Antriebseinheit 12 mit einem um eine Schwenkachse 13 verdrehbaren Schwenkkörper 14. Mittels der Antriebseinheit 12 ist jeweils eine, durch Pfeile 15, 16 symbolisierte, Zugkraft auf die Teilzugmittel 2, 3 aufbringbar. Die Teilzugmittel 2, 3 übertragen die Zugkraft jeweils über einen Anlenkpunkt auf das bewegbare Bauteil, um dieses zu Öffnen oder zu Schließen.
Die Teilzugmittel 2, 3 sind ein einziges Zugmittel 17 bildend miteinander verbunden, wobei die Teilzugmittel 2, 3 ein jeweiliges Ende 18, 19 des Zugmittels 17 bilden. Das Zugmittel 17 ist somit ein einziges Drahtseil. Innerhalb des Schwenkkörpers 14 ist das Zugmittel 17 in einer den Schwenkkörper 14 durchgreifenden Ausnehmung 20, die hier als an einer Oberfläche des Schwenkkörpers 14 offene und einen linearen Verlauf aufweisende Nut 21 ausgebildet ist, verschiebbar angeordnet.

Dabei durchgreift das Zugmittel 17 den Schwenkkörper 14 in einer Ebene senkrecht zur Schwenkachse 13 des Schwenkkörpers 14. Der Schwenkkörper 14 ist symmetrisch ausgebildet, so daß die das Zugmittel 17 aufnehmende Ausnehmung 20 den Schwenkkörper 14 die Schwenkachse 13 schneidend durchgreift.

Der Schwenkkörper 14 ist in einer durch einen Pfeil 22 symbolisierten Richtung um die Schwenkachse 13 verdrehbar, wobei Randabschnitte 23, 24 der Nut 21 aufweisende Auslenkelemente 25, 26 des Schwenkkörpers 14 die oben erwähnte Zugkraft auf die Enden 18, 19 des Zugmittels 17 ausüben. Es ist zu erkennen, daß die Auslenkelemente 25, 26 dazu in Längsrichtung des Zugmittels 17 versetzt zueinander angeordnet sind. Der Schwenkkörper 14 weist zudem eine Trommel 39 auf, auf die das Zugmittel 17 beim Verschwenken des Schwenkkörpers 14 aufrollbar ist.

Für eine Kraftbeaufschlagung des Zugmittels 17 auch in einer der eingezeichneten Drehrichtung des Schwenkkörpers 14 entgegengesetzten Drehrichtung können auch den vorerwähnten Auslenkelementen 25, 26 bezogen auf die Nut 21 gegenüberliegende Randabschnitte der Nut 21 als Auslenkelemente 37, 38 dienen.

Eine Betätigungsvorrichtung 1 mit einem Schwenkkörper 14, der eine ein Zugmittel 17 aufnehmende, als Nut 21 ausgebildete Ausnehmung 20 mit einem S-förmigen Verlauf aufweist, ist in Figur 2 in einer Seitenansicht gezeigt. Bei dieser Ausführungsform sind die in den Kehlen des den Verlauf der Nut 21 angebenden S angeordneten Randabschnitte 23, 24 der Nut 21 Bestandteil von Auslenkelementen 25, 26. Die entsprechende Drehrichtung des Schwenkkörpers 14 zur Ausübung einer Zugkraft auf die Enden 18, 19 des Zugmittels 17 ist durch einen Pfeil 22 symbolisiert.

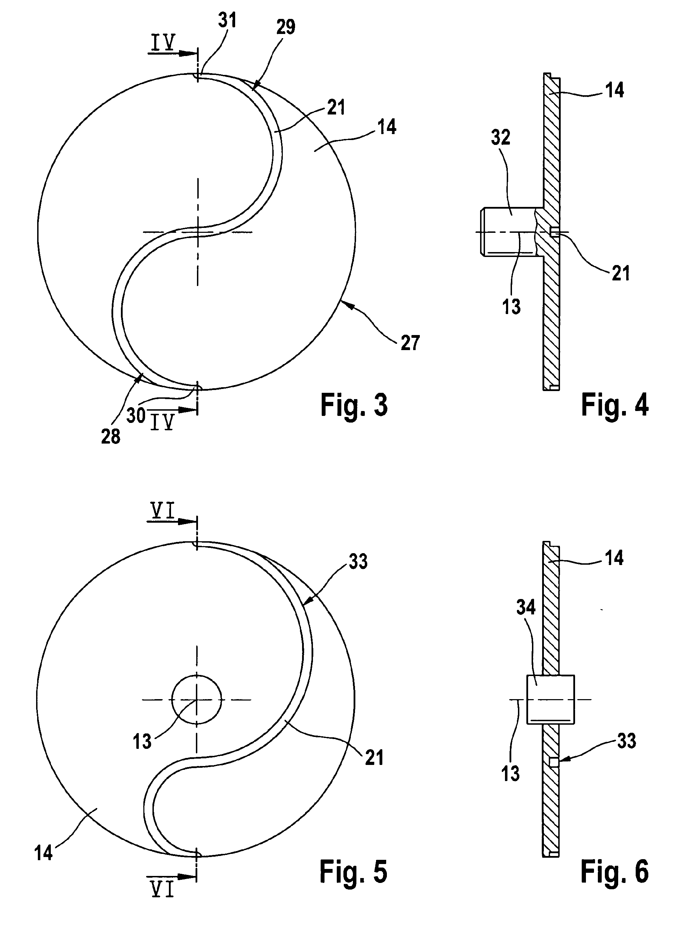

Der Schwenkkörper 14 ist in Figur 3 im einzelnen dargestellt. Es ist zu erkennen, daß der Schwenkkörper 14 eine kreisrunde Außenkontur 27 aufweist, in die Endbereiche 28, 29 der S-förmigen Nut 21 tangential übergehen. Enden 30, 31 der Nut 21 sind jeweils mit einer Ausrundung versehen, um das in der Nut 21 verschiebbar aufzunehmende Zugmittel 17 (vergleiche Figur 2) zu schonen.

In Figur 4 ist der Schwenkkörper 14 in teilgeschnittener Ansicht entlang Linie IV - IV nach Figur 3 gezeigt. Die Nut 21 durchgreift den Schwenkkörper 14 die Schwenkachse 13 schneidend. Auf der der Nut 21 gegenüberliegenden Seite des Schwenkkörpers 14 weist dieser einen Lagerzapfen 32 für eine einseitige Lagerung des Schwenkkörpers 14 in einer Antriebseinheit auf.

Ein alternativer Schwenkkörper 14 mit einer einen S-förmigen Verlauf aufweisenden, als Nut 21 ausgebildeten Ausnehmung 33 ist in Figur 5 dargestellt. Dieser Schwenkkörper 14 ist insofern nicht symmetrisch aufgebaut, als die Ausnehmung 33 den Schwenkkörper 14 von dessen Schwenkachse 13 beabstandet durchgreift. Das wird insbesondere aus Figur 6 deutlich, die den Schwenkkörper 14 in einer Schnittansicht entlang Linie VI - VI nach Figur 5 zeigt. Dadurch kann der Schwenkkörper 14 einen beidseitig überstehenden Lagerzapfen 34 für eine zweiseitige Lagerung des Schwenkkörpers 14 aufweisen.

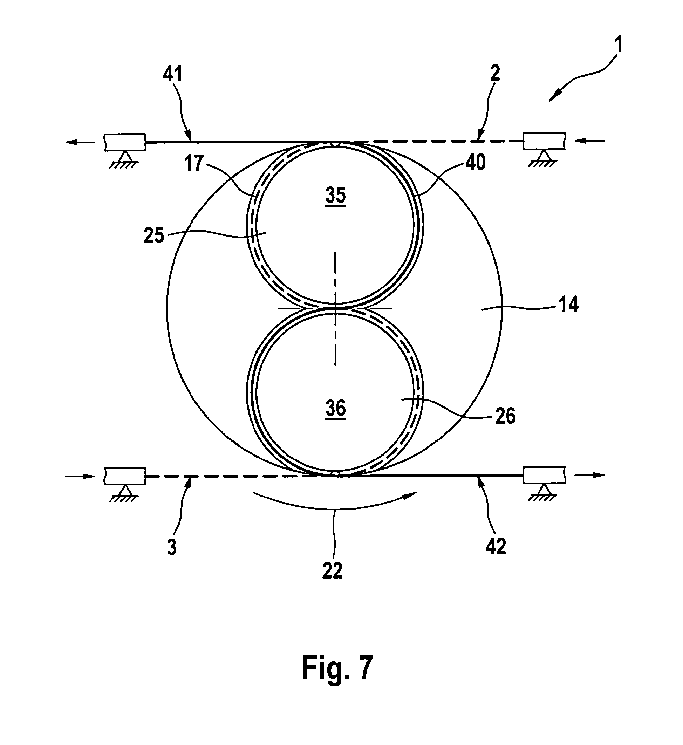

Ein Ausführungsbeispiel einer Betätigungsvorrichtung 1 mit einem Schwenkkörper 14, der an seiner Oberfläche drehbar gelagerte Rollen 35, 36 als Auslenkelemente 25, 26 aufweist, ist in Figur 7 gezeigt. Außerdem sind hier zwei, den Schwenkkörper 14 in unterschiedlichen, parallelen Ebenen verschiebbar durchgreifende Zugmittel 17, 40 vorgesehen, die jeweils aus zwei Teilzugmitteln 2, 3, 41, 42 gebildet sind. In einer durch einen Pfeil 22 symbolisierten Drehrichtung des Schwenkkörpers 14 wird auf das erste, gestrichelt dargestellte Zugmittel 17 eine Zugkraft ausgeübt, und das zweite, mittels einer durchgezogenen Linie dargestellte Zugmittel 40 wird entlastet. Bei entgegengesetzter Drehrichtung des Schwenkkörpers 14 wird das erste Zugmittel entlastet und auf das zweite Zugmittel 40 eine Zugkraft ausgeübt.

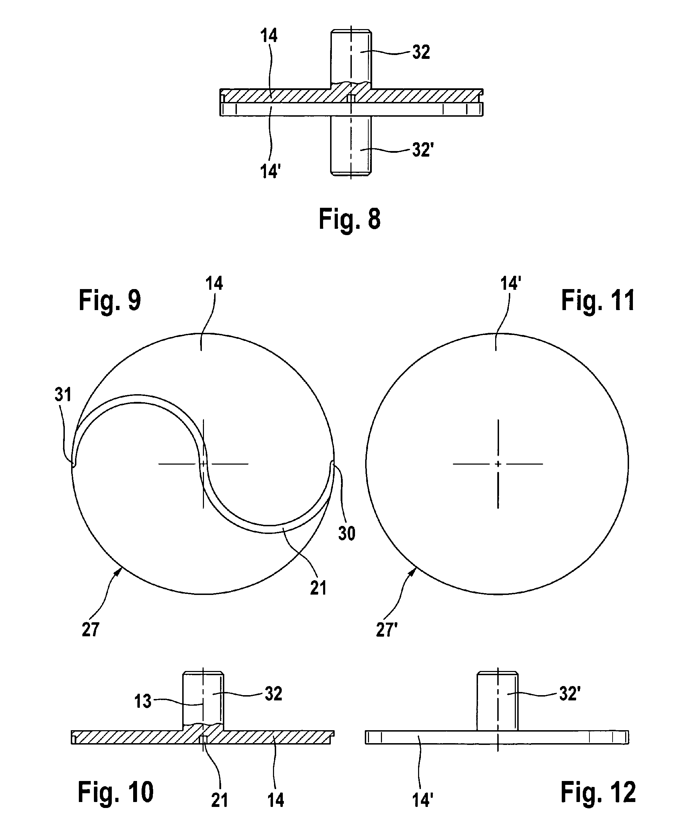

Der in den Figuren 8 bis 10 dargestellte Schwenkkörper 14 einer Schwenkkörperanordnung entspricht dem in den Figuren 3 und 4 dargestellten Schwenkkörper 14. Um die Öffnung der Nut 21 zu schließen ist auf die dem Lagerzapfen 32 abgewandte Kreisfläche des Schwenkkörpers 14, in die die Nut 21 hineinmündet, ein dem Schwenkkörper 14 entsprechender weiterer Schwenkkörper 14' aufgesetzt, der aber keine Nut 21 aufweist. Ferner kann der Schwenkkörper 14 einen beidseitig überstehenden Lagerzapfen 32 für eine zweiseitige Lagerung des Schwenkkörpers 14 aufweisen.

Die beiden Schwenkkörper 14 und 14' sind durch nicht dargestellte Mitnehmer wie z. B. Noppen oder Stifte des einen Schwenkkörpers, die in entsprechende Ausnehmungen des anderen Schwenkkörpers eingreifen, drehfest miteinander verbunden.

Die einander entgegengesetzt wegragenden Schwenkachsen 32 und 32' ermöglichen eine kippmomentfreie Lagerung der Schwenkkörperanordnung.

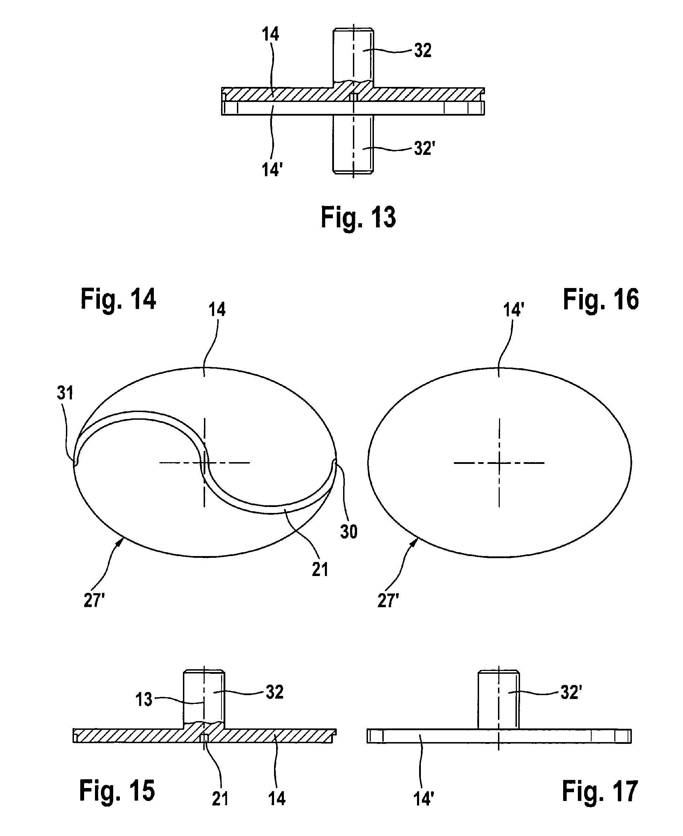

Bei der in den Figuren 13 bis 17 dargestellten Schwenkkörperanordnung entspricht der Aufbau der in den Figuren 8 bis 12 dargestellten Schwenkkörperanordnung mit dem Unterschied, daß die Außenkontur 27' nicht kreisrund sondern oval ist, womit ein sich verändernder Momentenverlauf erreicht werden kann. Grundsätzlich kann die Außenkontur 27' auch einen anderen Kurvenverlauf aufweisen, um einen jeweils gewünschten Momentenverlauf erzielen zu können.

### Bezugszeichenliste

- 1: Betätigungsvorrichtung
- 2, 3: Teilzugmittel
- 4,5: Bowdenzug
- 6, 7: Schlauch
- 8, 9: Drahtseil
- 10, 11: Befestigungspunkt
- 12: Antriebseinheit
- 13: Schwenkachse
- 14, 14': Schwenkkörper
- 15, 16: Pfeil
- 17: Zugmittel
- 18, 19: Ende
- 20: Ausnehmung
- 21: Nut
- 22: Pfeil
- 23, 24: Randabschnitt
- 25, 26: Auslenkelement
- 27, 27': Außenkontur
- 28, 29: Endbereich
- 30,31: Ende
- 32, 32': Lagerzapfen
- 33: Ausnehmung
- 34: Lagerzapfen
- 35,36: Rolle
- 37,38: Auslenkelement
- 39: Trommel
- 40: Zugmittel
- 41,42: Teilzugmittel

## Patentansprüche

1. Betätigungsvorrichtung für ein bewegbares Bauteil, insbesondere für ein verschwenk- und/oder verschiebbares Schließbauteil eines Kraftfahrzeuges, mit zwei auf jeweils einen Anlenkpunkt des Bauteils wirkenden Teilzugmitteln und mit einer einen drehbar antreibbaren Schwenkkörper für eine Kraftübertragung auf die Teilzugmittel aufweisenden Antriebseinheit, wobei die Teilzugmittel auf den Schwenkkörper auf- und abwickelbar sind, **dadurch gekennzeichnet, daß** die Teilzugmittel (2, 3) ein einziges Zugmittel (17) bildend miteinander verbunden sind und daß das Zugmittel (17) den Schwenkkörper (14) verschiebbar zwischen zwei an dem Schwenkkörper (14) angeordneten, bei einem Verschwenken des Schwenkkörpers (14) eine Zugkraft auf jeweils ein Ende (18, 19) des Zugmittels (17) ausübenden Auslenkelementen (25, 26) durchgreift.

2. Betätigungsvorrichtung nach Anspruch 1, **dadurch gekennzeichnet , daß** die Auslenkelemente (25, 26) in Längsrichtung des Zugmittels (17) versetzt zueinander angeordnet sind.

3. Betätigungsvorrichtung nach Anspruch 1 oder 2, **dadurch gekennzeichnet , daß** das Zugmittel (17) den Schwenkkörper (14) in einer Ebene senkrecht zur Schwenkachse (13) des Schwenkkörpers (14) durchgreift.

4. Betätigungsvorrichtung nach einem der vorhergehenden Ansprüche,
**dadurch gekennzeichnet, daß** die Auslenkelemente (25, 26) Randabschnitte (23, 24) einer den Schwenkkörper (14) durchgreifenden Ausnehmung (20) zur Führung des Zugmittels (17) aufweisen.

5. Betätigungsvorrichtung nach Anspruch 4, **dadurch gekennzeichnet, daß** die Ausnehmung (20) eine an einer stirnseitigen Oberfläche des Schwenkkörpers (14) offene Nut (21) ist.

6. Betätigungsvorrichtung nach Anspruch 4 oder 5, **dadurch gekennzeichnet, daß** die Ausnehmung (20) einen linearen Verlauf aufweist.

7. Betätigungsvorrichtung nach Anspruch 4 oder 5, **dadurch gekennzeichnet, daß** die Ausnehmung (20) einen S-artigen Verlauf aufweist.

8. Betätigungsvorrichtung nach einem der Ansprüche 4 bis 7, **dadurch gekennzeichnet , daß** die Ausnehmung (20) den Schwenkkörper (14) die Schwenkachse (13) schneidend durchgreift.

9. Betätigungsvorrichtung nach einem der Ansprüche 4 bis 7, **dadurch gekennzeichnet , daß** die Ausnehmung (33) den Schwenkkörper (14) von der Schwenkachse (13) beabstandet durchgreift.

10. Betätigungsvorrichtung nach einem der vorhergehenden Ansprüche, **dadurch gekennzeichnet, daß** die Auslenkelemente (25, 26) drehbar an dem Schwenkkörper (14) angeordnete Rollen (35, 36) aufweisen.

11. Betätigungsvorrichtung nach einem der vorhergehenden Ansprüche, **dadurch gekennzeichnet , daß** die Auslenkelemente (25, 26) und/oder das Zugmittel (17) eine reibungsvermindernde Oberfläche aufweisen.

12. Betätigungsvorrichtung nach einem der vorhergehenden Ansprüche, **dadurch gekennzeichnet , daß** der Schwenkkörper (14) eine Trommel (39) aufweist, auf die das Zugmittel (17) beim Verschwenken des Schwenkkörpers (14) aufrollbar ist.

13. Betätigungsvorrichtung nach einem der vorhergehenden Ansprüche, **dadurch gekennzeichnet, daß** zwei, den Schwenkkörper (14) in unterschiedlichen, parallelen Ebenen verschiebbar durchgreifende Zugmittel (17, 40) vorgesehen sind.
